Europäisches Patentamt

European Patent Office

Office européen des brevets

(19)

(11) **EP 0 558 362 B1**

(12) **FASCICULE DE BREVET EUROPEEN**

(45) Date de publication et mention
de la délivrance du brevet:
**28.08.1996 Bulletin 1996/35**

(51) Int Cl.6: **H02K 1/12**, H01F 7/14

(21) Numéro de dépôt: **93400274.2**

(22) Date de dépôt: **04.02.1993**

(54) **Actionneur rotatif électromagnétique monophasé de course entre 60 et 120 degrés**

Einphasiger elektromagnetischer Drehantrieb mit einer Strecke zwischen 60 und 120 Graden

Monophase electromagnetic rotary actuator with a movement between 60 and 120 degrees

(84) Etats contractants désignés:
**CH DE FR GB IT LI**

(30) Priorité: **28.02.1992 FR 9202435**

(43) Date de publication de la demande:
**01.09.1993 Bulletin 1993/35**

(73) Titulaire: **MOVING MAGNET TECHNOLOGIES
S.A.
F-25000 Besançon (FR)**

(72) Inventeurs:
• **Oudet, Claude
F-25000 Besancon (FR)**

• **Prudham, Daniel
F-25200 Thise (FR)**

(74) Mandataire: **Kopacz, William James
BREESE-MAJEROWICZ,
CNIT-WTC1,
B.P. 434
92053 Paris La Défense (FR)**

(56) Documents cités:
**WO-A-86/01028**     **WO-A-90/02870**
**WO-A-90/16107**     **DE-A- 4 215 011**

## Description

La présente invention concerne un actionneur rotatif électromagnétique monophasé destiné en particulier à la commande de vannes.

De tels actionneurs comportant un rotor et une structure statorique ont été en particulier décrits dans le brevet français n° 89.08.052 de la demanderesse. De tels actionneurs sont optimisés pour des courses importantes, proches de la limite qui est en théorie de 180 degrés pour des actionneurs à deux pôles et en pratique de l'ordre de 120 degrés, et pour des actionneurs à quatres pôles, de 90 degrés en théorie et de l'ordre de 60 degrés en pratique.

Pour des applications requérant des courses comprises entre 60 degrés et 120 degrés, et un couple important, les actionneurs de l'état de la technique présentent toutefois quelques inconvénients, en particulier en raison de leur poids et de leur encombrement.

En particulier, pour certaines applications, l'Homme de Métier choisit des moteurs pas-à-pas de type hybrides et non pas les moteurs monophasés de l'art antérieur. De tels moteurs sont de type biphasé et comportent généralement une cinquantaine de pôles. Ils présentent l'avantage d'un rapport $\frac{couple}{masse}$ élevé. Par contre, de tels moteurs nécessitent une électronique de commande complexe, qui augmente le coût global et réduit sa fiabilité. Par ailleurs, les entrefers fonctionnels sont, pour de tels moteurs pas-à-pas, inférieurs au dixième de millimètre, ce qui implique des tolérances de fabrication et d'assemblage très réduites, et grève le prix et la fiabilité de tels actionneurs.

L'objet de la présente invention est de remédier à ces inconvénients en proposant un actionneur performant, susceptible d'être piloté par un circuit de commande électronique monophasé moins complexe que les circuits de commande biphasés requis pour les moteurs pas-à-pas, de construction simple et robuste et permettant des mouvements angulaires rapides et présentant un rapport $\frac{couple}{masse}$ au moins aussi élevé que celui des moteurs hybrides, soit de l'ordre 1,5 Newtons-mètres par kilogramme pour des actionneurs de couple-crête de l'ordre du Newton..

A cet effet, l'invention concerne plus particulièrement un actionneur rotatif électromagnétique monophasé à course angulaire comprise entre $\frac{70}{N}$ degrés et $\frac{110}{N}$ degrés, de préférence comprise entre $\frac{80}{N}$ degrés et $\frac{100}{N}$ degrés, du type comprenant:

- un rotor présentant 2N aimants, N étant égal à 1 ou à 2, et un noyau en un matériau de haute perméabilité magnétique,
- un stator comportant au moins une bobine et présentant deux parties polaires réunies par au moins une partie de liaison, les parties polaires d'une part et le noyau du rotor d'autre part définissant entre eux un entrefer de longueur E constante et s'étendant sur 2N arcs $Y_a$.

La relation entre la largeur aimantée de chaque pôle d'aimants $Y_a$ mesurée sur le diamètre moyen des aimants, la largeur de l'arc angulaire C parcourue par le rotor sur le diamètre moyen des aimants, la largeur S mesurée sur le diamètre moyen des aimants, entre les deux pôles statoriques consécutifs, et la longueur constante E de l'entrefer est

$$Y_a = C + S + 2\,E'$$

où E' est compris entre $\frac{E}{2}$ et E.

En outre, $\frac{C + 2E'}{E} > 6$ et $\frac{L}{E} > 0,75$, de préférence $0,8 < \frac{L}{E} < 0,9$, L désignant la longueur de l'aimant dans le sens de l'aimantation.

Ces relations structurelles permettent d'assurer un couple constant à courant constant sur la quasi-totalité de la course du rotor, et de garantir un couple de détente en l'absence de courant très faible voir nul. Compte tenu de la course demandée - comprise entre $\frac{70}{N}$ degrés et $\frac{110}{N}$ degrés -, cette relation peut être vérifiée en prévoyant:

- soit une ouverture angulaire de chacun des pôles statoriques nettement inférieure à $\frac{180}{N}$ degrés, associé à une ouverture angulaire de chaque pôle d'aimant légèrement inférieure à $\frac{180}{N}$ degrés,
- soit une ouverture angulaire de chacun des pôles d'aimant nettement inférieure à $\frac{180}{N}$ degrés, associé à une une ouverture angulaire de chaque pôle statorique légèrement inférieure à $\frac{180}{N}$ degrés.

Dans les deux cas, la largeur angulaire d'aimant situé dans l'entrefer est comprise entre $\frac{80}{N}$ degrés et $\frac{120}{N}$ degrés.

Par "nettement inférieur", il faut entendre "inférieur d'au moins $\frac{50}{N}$ degrés", et par "sensiblement inférieur", "inférieur de moins de 10 degrés".

Le couple obtenu avec des actionneurs selon l'invention est sensiblement égale à $N.D_m.B_r.\frac{L}{E}.Z.n.l$, où:

- N désigne le nombre de paires de pôles
- $D_m$ désigne le diamètre moyen de l'aimant
- $B_r$ désigne l'induction rémanente des aimants
- nl désigne le nombre d'ampères-tours appliqués à la bobine ou aux bobines
- L désigne la longueur des aimants suivant la direction de l'aimantation
- E désigne la longueur de l'entrefer
- Z désigne la dimension de l'aimant, mesurée suivant une direction perpendiculaire à l'aimantation et au sens de déplacement, c'es! à dire dans une direction axiale (hauteur) dans le cas d'une structure à aimants-tuile semi-tubulaire, soit dans une direction radiale pour une structure à aimants-disques.

Selon un premier mode de réalisation, l'actionneur rotatif électromagnétique monophasé selon l'invention présente des aimants dont l'aimantation est sensiblement radiale, en forme de tuiles cylindriques, d'une lar-

geur périphérique $Y_a$ mesurée sur le diamètre moyen des aimants. La partie statorique comporte 2 N pièces polaires coopérant avec les aimants, reliées par une pièce de liaison en forme de U. La bobine d'excitation est supportée par ladite partie de liaison. Une variante consiste à prévoir deux bobines entourant chacune l'un des pôles statoriques.

Selon un deuxième mode de réalisation, les aimants du rotor sont en forme de secteurs de disque aimantés transversalement, la partie statorique comportant 2N pièces polaires coopérant avec l'aimant, reliés par une pièce de liaison en forme de U supportant la bobine d'excitation. Une variante consiste à prévoir deux bobines entourant chacune l'un des pôles statoriques.

Selon un troisième mode de réalisation, le plan de section médian de la partie de liaison en U est perpendiculaire à l'axe de rotation du rotor.

Selon une autre variante, le plan de section médian de la partie de liaison en U est parallèle à un plan de symétrie de chacune des parties polaires et contenant l'axe de rotation du rotor.

Selon une variante particulière, les parties polaires du stator sont réunies par deux parties de liaison diamétralement opposées, portant chacune une bobine d'excitation. Une variante consiste à prévoir deux bobines entourant chacune l'un des pôles statoriques.

Selon un premier mode préféré, la largeur S mesurée sur le diamètre moyen des aimants entre deux pôles statoriques consécutifs est sensiblement égale à la longueur E de l'entrefer. La largeur de l'arc $Y_a$ de chacun des pôle des aimants est:

$$Y_a = C + 2\,E' + S \approx C + 3\,E',$$

et les deux aimants s'étendent sur des arcs compris entre à $\frac{80°}{N}$ et $\frac{130°}{N}$.

Selon un autre mode avantageux, la largeur de l'arc $Y_s$ d'un pôle statorique mesuré sur le diamètre moyen des aimants est égal à:

$$Y_s = C + 2\,E' + T \approx C + 3\,E',$$

où T désigne la zone de transition entre les deux aimants du rotor, les pôles statoriques s'étendant sur des arcs compris entre $\frac{80°}{N}$ et $\frac{130°}{N}$.

De préférence, le rapport $\frac{L}{E}$ où L désigne la longueur suivant la direction de l'aimantation des aimants est supérieur à 0,8, afin d'obtenir un point de fonctionnement moyen élevé dans le deuxième quadrant de la courbe B(H), de façon à ce que l'excitation des parties statoriques puisse faire varier le point de fonctionnement avec une excursion importante comprise entre O Tesla et l'induction maximale correspondant à une valeur pour laquelle la perméabilité du fer est faible, soit environ 1,7 Teslas.

Avantageusement, la section de la partie statorique de liaison perpendiculaire aux lignes de champs est sensiblement égale à C x Z, où :

- C désigne la course du rotor mesurée sur le diamètre moyen des aimants ;
- Z désigne la hauteur des aimants, mesurée selon une dimension perpendiculaire au déplacement et à la direction d'aimantation.

Selon une variante de réalisation particulière, la structure statorique est constituée par deux paquets de tôles parallèles, lesdits paquets étant assemblés perpendiculairement :

- le premier desdits paquets de tôles définissant les parties statoriques polaires étant constitué de tôles disposées perpendiculairement à l'axe de rotation ;
- le deuxième paquet de tôle définissant la partie de liaison en U et étant constitué de tôles parallèles à un plan de symétrie du stator contenant l'axe de rotation du rotor ;
- les tôles présentant des découpes pour l'emboîtement et le positionnement relatifs desdits paquets de tôles.

Avantageusement, le premier paquet de tôles définissant les parties polaires est constitué de deux séries de tôles polaires de forme symétrique par rapport au plan médian de l'actionneur et comporte à chaque extrémité une tôle unique correspondant auxdites tôles polaires réunies par un 2N isthmes saturables.

La présente invention sera mieux comprise à la lecture de la description qui suit, faisant référence aux dessins où:

- La figure 1 représente une vue en coupe transversale d'un premier mode de réalisation d'un actionneur selon l'invention ;
- la figure 2 représente une vue schématique d'un tel actionneur ;
- la figure 3 représente une vue en coupe transversale d'un deuxième mode de réalisation d'un actionneur selon l'invention ;
- la figure 4 représente une vue en coupe transversale d'une variante d'un actionneur à deux bobines ;
- la figure 5 représente une vue en coupe transversale d'un troisième mode de réalisation ;
- la figure 6 représente une vue en coupe d'un actionneur à aimant discal ;
- la figure 7 représente une vue de ce même actionneur selon un plan de coupe perpendiculaire AA';
- la figure 8 représente une vue en coupe d'un autre mode de réalisation d'un actionneur ;
- la figure 9 représente une vue de ce même actionneur selon un plan de coupe BB'.

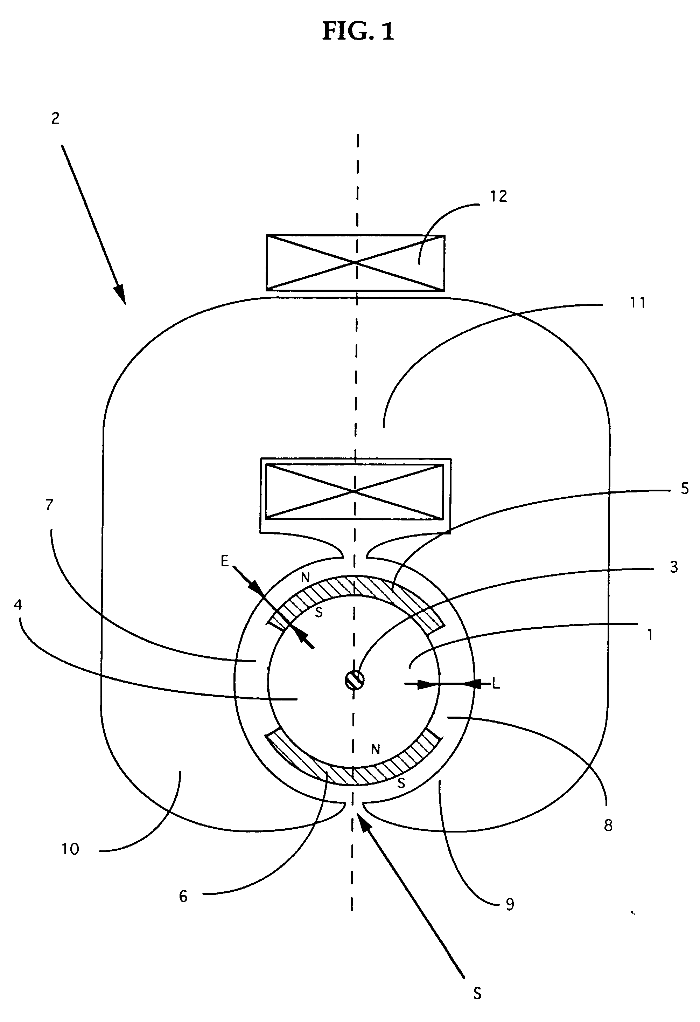

La figure 1 représente une vue en coupe d'un premier mode de réalisation d'un actionneur selon l'invention.

L'actionneur selon ce mode de réalisation présente un rotor (1) et un stator (2). Le rotor (1) est mobile en rotation autour d'un axe (3). Le rotor est constitué par un noyau cylindrique en fer doux (4) supportant deux aimants (5, 6). Ces aimants (5, 6) sont en forme de tuiles, c'est-à-dire de secteur cylindrique mince. Ils sont aimantés radialement, en sens opposé, ils sont solidarisés avec le noyau en fer doux (4) par collage ou par frettage.

Chacun des aimants (5, 6) s'étend sur un arc cylindrique d'environ $\frac{120}{N}$ degrés. Dans le cas représenté, N=1, et les aimants s'étendent sur environ 120 degrés. Les aimants (5, 6) ne sont pas jointifs, mais préservent entre-eux, de part et d'autre, un intervalle cylindrique (7, 8), s'étendant chacun sur un arc d'environ 60 degrés. L'épaisseur radiale L des aimants est de l'ordre de 2,5 millimètres. La hauteur des aimants (5, 6) du rotor est d'environ 25 millimètres.

Le stator (2) présente deux parties polaires (9, 10) reliées par une partie statorique de liaison (11) supportant la bobine (12). Il est constitué par un empilement de tôles de fer doux, ou de fer-silicium, perpendiculaires à l'axe (3) du rotor. Le noyau (4) du rotor et des pôles statoriques (9, 10) déterminent entre eux un entrefer d'une longueur radiale E, occupée en partie par les aimants (5, 6).

Dans l'exemple décrit, la longueur radiale de l'entrefer est de 3 millimètres. Dans ce mode de réalisation décrit en figure 1, les parties polaires (9, 10) sont très enveloppantes, et les extrémités sont séparées par deux fentes d'une largeur S, mesurée sur le diamètre moyen des aimants. Dans l'exemple décrit, la largeur S de la fente est environ égale à deux millimètres.

Dans l'exemple décrit, le diamètre moyen D des aimants est de 28 millimètres. La largeur $Y_a$ de la zone aimantée est de $\frac{120}{360}$ x $\pi$ x $D_m$ = 29,3 millimètres.

La course, dans des conditions en couple de détente nul en l'absence de courant est environ égale à Ya - 2E'- S, soit 22 millimètres, ce qui correspond à une amplitude de rotation d'environ 90 degrés. Les limitations de la course s'effectuent par tout moyen connu par exemple des butées.

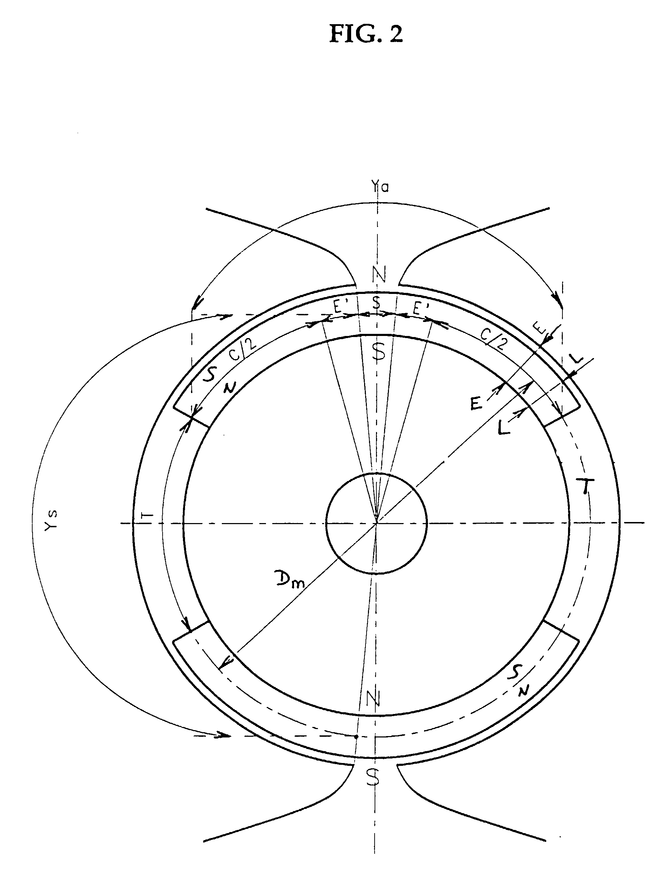

La figure 2 représente une vue schématique de l'actionneur, faisant apparaître les différentes dimensions. Il s'agit de l'exemple de réalisation avec des pôles statoriques larges, et donc avec fente S étroite, coopérant avec des aimants tuiles s'étendant sur nettement moins de $\frac{180}{N}$ degrés. Le rotor est représenté à mi-course, dans une position angulaire intermédiaire. Le rotor est mobile de ± 45 degrés par rapport à

la position représentée. Toutes les dimensions $\frac{C}{2}$, E', S, T, $Y_s$ et $Y_a$ sont mesurées sur un cercle dont le diamètre correspond au diamètre moyen $D_m$ pris au milieu de l'épaisseur des aimants minces (5, 6).

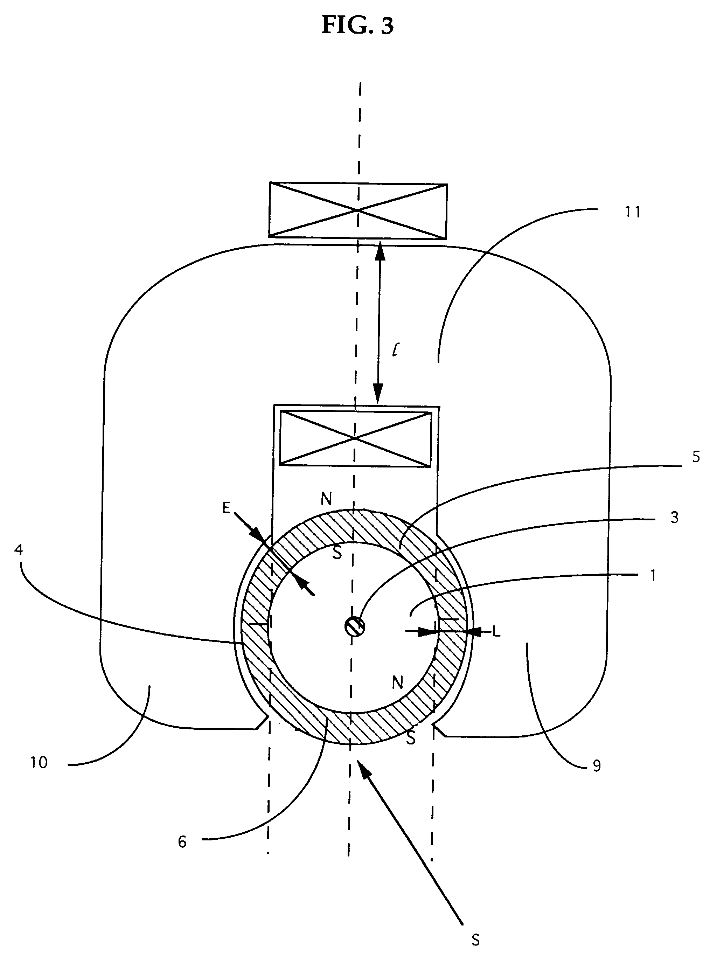

Dans l'exemple décrit en figure 3, l'actionneur comporte deux aimants (5, 6) se rejoignant et s'étendant chacun sur $\frac{180}{N}$ degrés. Les parties polaires (9, 10) du stator sont moins enveloppantes, et leurs extrémités sont séparées par une fente S nettement plus large que dans l'exemple décrit en figure 1.

Selon une variante de réalisation, les aimants (5, 6) peuvent être réalisées sous forme d'une bague unique, en un matériau de type "MQII" (nom commercial du matériau commercialisé par la société General Motors) réalisés en une structure métallique pure, isotrope. Ce matériau est aimanté suivant des secteurs cylindriques proches de $\frac{180}{N}$ degrés.

Dans le mode de réalisation décrit en figure 3, les dimensions des différents constituants de l'actionneur sont les suivantes :

- Le diamètre moyen des aimants est :

$$D_m = 28 \text{ millimètres}$$

- La course angulaire du rotor est de 90 degrés, d'où :

$$C = \frac{90}{360} \text{ x } D_m \text{ x } \pi = 22 \text{ millimètres}$$

   - La longueur radiale de l'entrefer E est de 3 millimètres.
- la longueur L radiale des aimants est de 2,5 millimètres.
- la largeur S de la fente est de 2,4 millimètre.
- la hauteur H des aimants (15, 16) est de 25 millimètres.
- la largeur 1 de la partie de liaison (11) est de 25 millimètres.

Dans un tel actionneur, les ampères-tours appliqués à la ou aux bobines peuvent atteindre une valeur proche de $\pm \frac{B_r \cdot L}{\mu_0 \cdot \mu_r}$ où :

- $B_r$ désigne l'induction rémanente
- L désigne la longueur radiale des aimants
- $\mu_0$ désigne la perméabilité du vide
- $\mu_r$ désigne la perméabilité réversible des aimants.

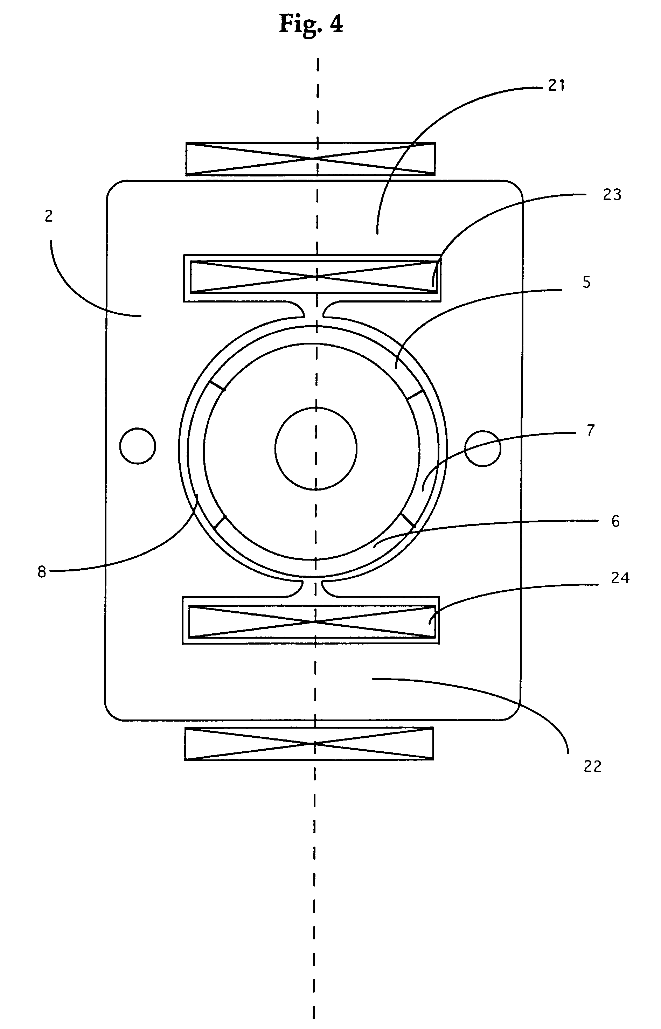

La figure 4 représente un autre mode de réalisation dans lequel le stator (2) présente deux parties de liaison (21, 22). Dans cet exemple, l'actionneur comporte deux bobines (23, 24). Le rotor comporte, comme dans l'exemple représenté en figure 1, deux aimants (5, 6) séparés par des intervalles cylindriques (7, 8).

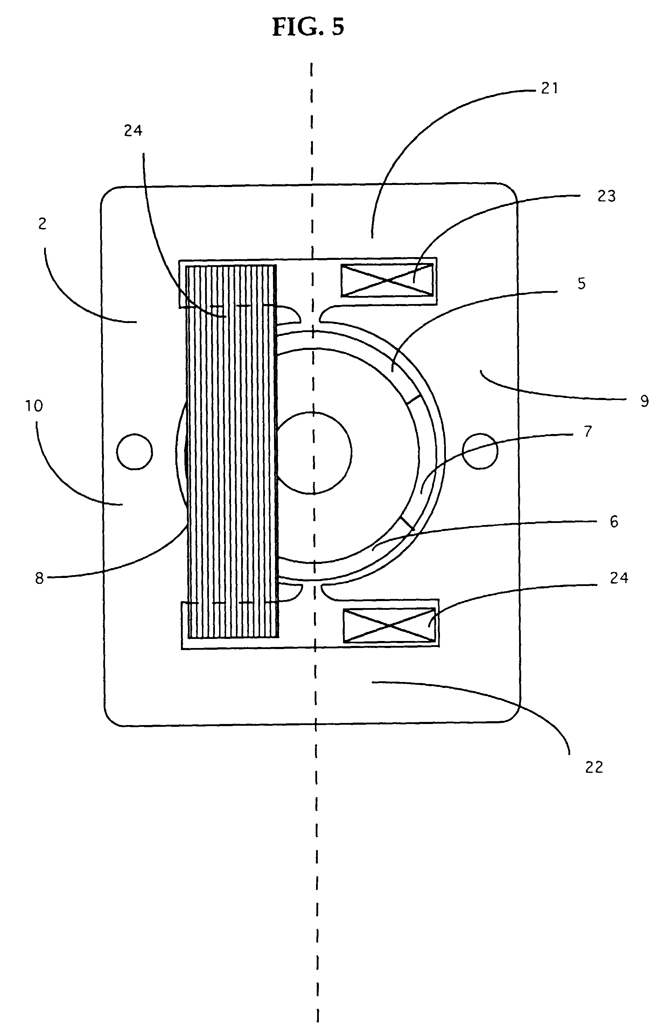

La figure 5 représente une variante d'actionneur selon l'invention comportant deux bobines (23, 24) entourant chacune l'un des pôles statoriques 9, 10).

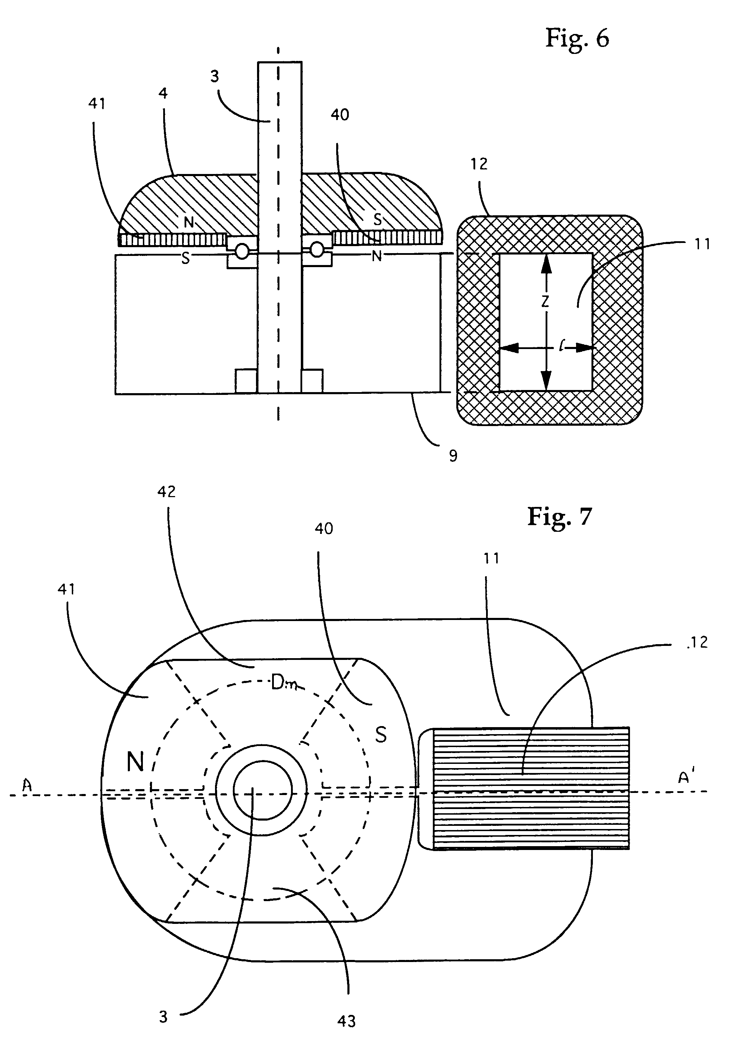

La figure 6 représente une vue en coupe d'un actionneur comportant un aimant en forme de disque. Il est constitué par un rotor (1) muni d'un axe de rotation (3), et d'un stator comportant une partie statorique de liaison (11) et deux parties polaires (9, 10). La partie de liaison (11) du stator supporte une bobine (12).

La figure 7 représente une vue selon un plan de coupe AA' de cet actionneur. Le rotor comporte deux aimants (40, 41), aimantées transversalement, et s'étendant sur des arcs compris entre $\frac{80}{N}$ et $\frac{130}{N}$ degrés. Les aimants (40, 41) sont solidaires d'un noyau (4) en un matériau de haute perméabilité magnétique. Les aimants (40, 41) sont séparées par des intervalles (42, 43). Les dimensions de l'actionneur selon cet exemple de réalisation sont les suivantes :

- hauteur Z de la partie de liaison statorique (11): 17 millimètres ;
- épaisseur L de l'aimant : 2,5 millimètres ;
- longueur E de l'entrefer : 3 millimètres ;
- diamètre moyen des aimants $D_m$ : 35 millimètres
- course angulaire du rotor : 90 degrés
- course du rotor, mesurée sur le diamètre moyen des aimants : 27,5 millimètres ;
- arc $Y_a$ des aimants (40, 41), mesuré sur le diamètre moyen des aimants $D_m$: 37 millimètres;

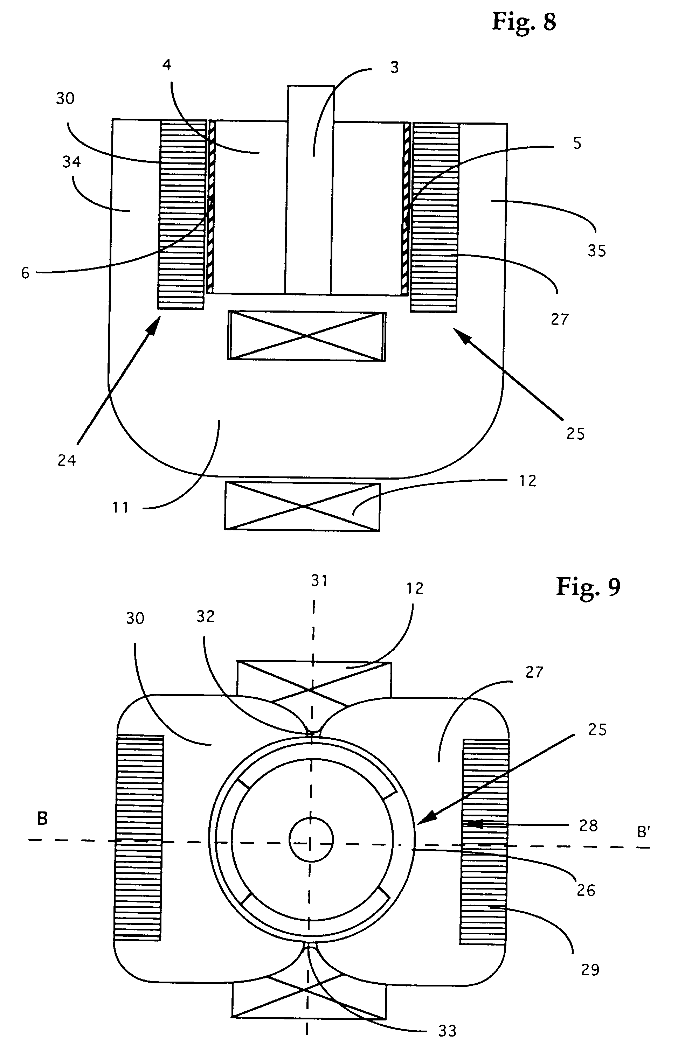

La figure 8 représente une vue en coupe d'un actionneur dans lequel la partie statorique de liaison (11) est parallèle à un plan contenant l'axe de rotation (3) du rotor. La bobine (12) est disposée à l'arrière de rotor (1). Le rotor est constitué, comme dans les exemples précédents, par un noyau en fer doux (4) supportant des aimants semi-tubulaires (5, 6) aimantés radialement, en forme de tuiles.

Le stator est constitué par emboîtement de deux paquets de tôles perpendiculaires. Le premier paquet formant les pôles statoriques est constitué par deux séries (23, 24) de tôles (27, 30) orientées perpendiculairement à l'axe (3) du rotor. La forme de ces tôles est plus visible sur la figure 9, représentant une vue de dessus de l'actionneur. La première série (23) du paquet de tôles perpendiculaires à l'axe (3) présente une partie concave en forme d'arc de cercle (25), correspondant aux bords extérieurs de l'entrefer (26). L'épaisseur du paquet de tôles (27, 30) mesuré dans une direction parallèle à l'axe du rotor est sensiblement égale à Z. La partie extérieure des tôles (27, 30) présente une découpe (28) pour l'emboîtage du deuxième paquet de tôles (29). Une deuxième série de tôles (30) symétriques par rapport à un plan médian (31) constitue le deuxième pôles statoriques. Afin de permettre une définition précise de l'entrefer, la première et la dernière tôle du premier paquet (24, 25) ont chacune des parties réunies par deux isthmes saturables.

Le deuxième paquet de tôles (29) est constitué de tôles disposées perpendiculairement au premier paquet de tôles. La forme générale de ces tôles du deuxième paquet est représentée sur la figure 8. Chacune des tôles présente une forme générale en U, elle comporte une partie de liaison (11) prolongée par deux bras (34, 35).

**Revendications**

1. Actionneur rotatif électromagnétique monophasé de course angulaire comprise entre $\frac{70}{N}$ et $\frac{110}{N}$ degrés, de préférence comprise entre $\frac{80}{N}$ et $\frac{100}{N}$ degrés, du type comprenant:

- un rotor (1) présentant 2N aimants (5, 6; 40, 41), N étant égal à 1 ou à 2, et un noyau (4) en un matériau de haute perméabilité magnétique,
- un stator (2) présentant deux parties polaires (9, 10) réunies par au moins une partie de liaison (11) supportant au moins une bobine, les parties polaires (9, 10) d'une part et le noyau (4) du rotor (1) d'autre part définissant entre eux un entrefer de longueur E constante et s'étendant sur 2N arcs $Y_a$, caractérisé en ce que les aimants (5, 6) sont du type à caractéristique linéaire dans le deuxième quadrant de la courbe B(H) et à perméabilité réversible proche de 1 et en ce que la relation entre la largeur aimantée $Y_a$ mesurée sur le diamètre moyen des aimants (5,6; 40, 41), la largeur de l'arc angulaire C parcourue par le rotor (1) sur le diamètre moyen des aimants (5,6; 40, 41), la largeur S mesurée sur le diamètre moyen des aimants (5,6; 40, 41) entre deux pôles statoriques (9, 10) adjacents, et la longueur constante E de l'entrefer est

$$Y_a = C + S + 2 E'$$

où:
E' est compris entre $\frac{E}{2}$ et E
et en ce que

$$\frac{C + 2 E'}{E} > 6$$

et en ce que

$$\frac{L}{E} > 0,75, \text{ de préférence } 0,8 < \frac{L}{E} < 0,9$$

L désignant la longueur radiale de l'aimant, pour obtenir un rapport $\frac{couple}{masse}$ élevé et un couple sensiblement indépendant de la position angulaire du rotor (1).

2. Actionneur rotatif électromagnétique monophasé selon la revendication 1 caractérisé en ce que les 2N aimants (5, 6) du rotor (1) sont constituées par des aimants (5 6) aimantés radialement en forme de tuiles cylindriques d'une largeur périphérique $Y_a$ mesuré sur le diamètre moyen Dm des aimants (5, 6), lesdits aimants (5, 6) s'étendant sur des secteurs angulaires compris entre $\frac{80}{N}$ degrés et $\frac{130}{N}$ degrés, et en ce que la partie statorique comporte 2 N pièces polaires (9, 10) coopérant avec l'aimant reliés par une pièce de liaison (11) en forme de U.

3. Actionneur rotatif électromagnétique monophasé selon la revendication 1 caractérisé en ce que les 2N aimants (40, 41) du rotor (1) sont constituées par des aimants (40, 41) aimantés transversalement en forme de secteurs de disque d'une ouver-

ture comprise entre $\frac{80}{N}$ et $\frac{130}{N}$ degrés, et en ce que la partie statorique comporte 2 N pièces polaires (9, 10) coopérant avec l'aimant reliées par une pièce de liaison (11) en forme de U.

4. Actionneur rotatif électromagnétique monophasé selon la revendication 2 ou 3 caractérisé en ce que le plan de section médian de la partie de liaison (11) en U est perpendiculaire à l'axe de rotation du rotor (1).

5. Actionneur rotatif électromagnétique monophasé selon la revendication 2 ou 3 caractérisé en ce que le plan de section médian de la partie de liaison (11) en U est parallèle à un plan de symétrie des parties polaires (9, 10) et contenant l'axe de rotation (3) du rotor (1).

6. Actionneur rotatif électromagnétique monophasé selon l'une quelconque des revendications précédentes caractérisé en ce que la partie statorique comporte deux bobines entourant chacune l'une des parties polaires (9, 10), lesdites parties polaires (9, 10) étant réunies par une ou par deux parties de liaison.

7. Actionneur rotatif électromagnétique monophasé selon l'une quelconque des revendications 2 à 6 caractérisé en ce que les parties polaires (9, 10) du stator (2) sont réunies par deux parties de liaison (11) diamétralement opposées portant chacune une bobine d'excitation.

8. Actionneur rotatif électromagnétique monophasé selon l'une quelconque des revendications précédentes caractérisé en ce que la largeur S mesurée sur le diamètre moyen $D_m$ des aimants (5,6; 40, 41) entre deux pôles statoriques (9, 10) consécutifs est comprise entre $\frac{E}{2}$ et E, E désignant la longueur de l'entrefer mesurée dans la direction de l'aimantation, et en ce que la largeur périphérique $Y_a$ des aimants mesurée sur le diamètre moyen $D_m$ des aimants (5,6; 40, 41) est:

$$Y_a = C + 2\,E' + S \approx C + 3\,E',$$

et en ce que les deux aimants (5,6; 40, 41) s'étendent sur des arcs nettement inférieurs à 180 °/N.

9. Actionneur rotatif électromagnétique monophasé selon l'une quelconque des revendications 1 à 7 caractérisé en ce que la largeur $Y_s$ d'un pôle statorique mesurée sur le diamètre moyen $D_m$ des aimants (5,6; 40, 41) est égale à:

$$Y_s = C + 2\,E' + T \approx C + 3\,E',$$

où T désigne la zone de transition entre deux aimants (5,6; 40, 41) adjacents du rotor (1), T étant inférieur à E,

et en ce que les deux aimants (5,6; 40, 41) s'étendent sur des arcs nettement inférieurs à $\frac{180°}{N}$.

10. Actionneur rotatif électromagnétique monophasé selon l'une quelconque des revendications précédentes caractérisé en ce que le rapport L/E où L désigne la longueur mesurée dans la direction de l'aimantation des aimants (5,6; 40, 41) est supérieur à 0,75, de préférence compris entre 0,8 et 0,9.

11. Actionneur rotatif électromagnétique monophasé selon l'une quelconque des revendications précédentes caractérisé en ce que la section de la partie statorique de liaison (11) perpendiculaire aux lignes de champs est sensiblement égale à C x Z, où:

C désigne la course du rotor (1) mesurée sur le diamètre moyen des aimants (5,6; 40, 41), Z désigne la hauteur des aimants (5,6; 40, 41) mesuré selon une dimension perpendiculaire au déplacement et à la direction d'aimantation.

12. Actionneur rotatif électromagnétique monophasé selon l'une quelconque des revendications 1 à 6, ou 8 à 9 caractérisé en ce que la structure statorique est constituée par deux paquets de tôles parallèles, lesdits paquets étant assemblés perpendiculairement, le premier desdits paquets de tôles définissant les parties statoriques polaires (9, 10) étant constitués de tôles disposées perpendiculairement à l'axe de rotation (3), le deuxième paquet de tôle définissant la partie de liaison (11) en U et étant constitué de tôles parallèles à un plan de symétrie du stator (2) passant par le milieu des pôles statoriques et contenant l'axe de rotation (3) du rotor (1) et passant par les pôles statoriques (9, 10), les tôles présentant des découpes pour l'emboîtement et le positionnement relatifs desdits paquets de tôles.

13. Actionneur rotatif électromagnétique monophasé selon la revendication 12 caractérisé en ce que le premier paquet de tôles définissant les parties polaires (9, 10) est constitué de deux séries de tôles polaires (9, 10) de forme symétrique par rapport au plan médian de l'actionneur et comporte à chaque extrémité une tôle unique correspondant auxdites tôles polaires réunies par 2N isthmes saturables.

**Patentansprüche**

1. Einphasiges, elektromagnetisches, rotierendes Betätigungselement mit Winkelhub zwischen $\frac{70}{N}$ und $\frac{110}{N}$ Grad, vorzugsweise zwischen $\frac{80}{N}$ und $\frac{100}{N}$ Grad,

bestehend aus:

- einem Rotor (1), der 2N Magnete (5, 6; 40, 41), wobei N gleich 1 oder 2 ist, und einen Kern (4) aus einem Material hoher magnetischer Permeabilität aufweisc,

- einem Stator (2), der zwei Polteile (9, 10) aufweist, die durch zumindest einen Verbindungsteil (11) verbunden sind, der zumindest eine Spule trägt, wobei die Polteile (9, 10) einerseits und der Kern (4) des Rotors (1) andererseits zwischen sich einen Luftspalt konstanter Länge E definieren, der auf 2N Bögen $Y_a$ verläuft, dadurch gekennzeichnet, daß die Magnete (5, 6) im zweiten Quadranten der Kurve B (H) eine lineare Charakteristik aufweisen und eine reversible permeabilität nahe 1 besitzen, und dadurch, daß das Verhältnis zwischen der magnetisierten Breite $Y_a$, gemessen am durchschnittlichen Durchmesser der Magnete (5, 6; 40, 41), der Breite des Winkelbogens C, die der Rotor (1), gemessen am durchschnittlichen Durchmesser der Magnete (5, 6; 40, 41), durchläuft, der Breite S, gemessen am durchschnittlichen Durchmesser der Magnete (5, 6; 40, 41) zwischen zwei aneinandergrenzenden Statorpolen (9, 10) und der konstanten Länge E des Luftspalts gleich ist:

$$Y_a = C + S + 2\,E'$$

wobei:
E' zwischen $\frac{E}{2}$ und E liegt
und daß

$$\frac{C + 2\,E'}{E} > 6$$

und daß

$$\frac{L}{E} > 0,75, \text{ vorzugsweise } 0,8 < \frac{L}{E} < 0,9$$

wobei L die Radiallänge des Magneten bezeichnet, um ein hohes Verhältnis $\frac{Moment}{Masse}$ und ein im wesentlichen von der Winkelposition des Rotors (1) unabhängiges Moment zu erhalten.

2. Einphasiges, elektromagnetisches, rotierendes Betätigungselement nach Anspruch 1, dadurch gekennzeichnet, daß die 2N Magnete (5, 6) des Rotors (1) von radial magnetisierten Magneten (5, 6) in Form von zylindrischen Ziegeln gebildet werden, mit einer Umfangsbreite $Y_a$, gemessen am durchschnittlichen Durchmesser Dm der Magnete (5, 6), wobei diese Magnete (5, 6) auf Winkelsektoren zwischen $\frac{80}{N}$ Grad und $\frac{130}{N}$ Grad verlaufen, und daß der Statorteil 2N Polteile (9, 10) umfaßt, die mit dem Magneten zusammenwirken und durch ein Verbindungsstück (11) in Form eines U verbunden sind.

3. Einphasiges, elektromagnetisches, rotierendes Betätigungselement nach Anspruch 1, dadurch gekennzeichnet, daß die 2N Magnete (40, 41) des Rotors (1) von quer magnetisierten Magneten (40, 41) in Form von Scheibensektoren gebildet werden, mit einer Öffnung zwischen $\frac{80}{N}$ und $\frac{130}{N}$ Grad, und daß der Statorteil 2N Polteile (9, 10) umfaßt, die mit dem Magneten zusammenwirken und durch ein Verbindungsstück (11) in Form eines U verbunden sind.

4. Einphasiges, elektromagnetisches, rotierendes Betätigungselement nach Anspruch 2 oder 3, dadurch gekennzeichnet, daß die mittlere Schnittfläche des Verbindungsteils (11) in U-Form auf die Rotationsachse des Rotors (1) senkrecht steht.

5. Einphasiges, elektromagnetisches, rotierendes Betätigungselement nach Anspruch 2 oder 3, dadurch gekennzeichnet, daß die mittlere Schnittfläche des Verbindungsteils (11) in U-Form zu einer Symmetrieebene der Polteile (9, 10), die die Rotationsachse (3) des Rotors (1) enthält, parallel ist.

6. Einphasiges, elektromagnetisches, rotierendes Betätigungselement nach einem der vorhergehenden Ansprüche, dadurch gekennzeichnet, daß der Statorteil zwei Spulen umfaßt, die jeweils einen der Polteile (9, 10) umgeben, wobei diese Polteile (9, 10) durch einen oder mehrere Verbindungsteile verbunden sind.

7. Einphasiges, elektromagnetisches, rotierendes Betätigungselement nach einem der Ansprüche 2 bis 6, dadurch gekennzeichnet, daß die Polteile (9, 10) des Stators (2) durch zwei Verbindungsteile (11) verbunden sind, die einander diametral gegenüberliegen und jeweils eine Erregerspule tragen.

8. Einphasiges, elektromagnetisches, rotierendes Betätigungselement nach einem der vorhergehenden Ansprüche, dadurch gekennzeichnet, daß die Breite S, gemessen am durchschnittlichen Durchmesser $D_m$ der Magnete (5, 6; 40, 41) zwischen zwei aufeinanderfolgenden Statorpolen (9, 10) zwischen $\frac{E}{2}$ und E liegt, wobei E die Länge des Luftspaltes, gemessen in die Richtung der Magnetisierung, bezeichnet, und daß die Umfangsbreite $Y_a$ der Magnete, gemessen am durchschnittlichen Durchmesser $D_m$ der Magnete (5, 6; 40, 41) folgende ist:

$$Y_a = C + 2\,E' + S = C + 3\,E'$$

und daß die beiden Magnete (5, 6; 40, 41) auf Bögen verlaufen, die eindeutig kleiner als 180°/N sind.

9. Einphasiges, elektromagnetisches, rotierendes Betätigungselement nach einem der Ansprüche 1 bis 7, dadurch gekennzeichnet, daß die Breite $Y_s$ eines

Statorpols, gemessen am durchschnittlichen Durchmesser $D_m$ der Magnete (5, 6; 40, 41), gleich ist:

$$Y_s = C + 2 E' + T = C + 3 E'$$

wobei T den Übergangsbereich zwischen zwei aneinandergrenzenden Magneten (5, 6; 40, 41) des Rotors (1) bezeichnet, wobei T kleiner als E ist,
und daß die beiden Magnete (5, 6; 40, 41) auf Bögen verlaufen, die eindeutig kleiner als 180°/N sind.

10. Einphasiges, elektromagnetisches, rotierendes Betätigungselement nach einem der vorhergehenden Ansprüche, dadurch gekennzeichnet, daß das Verhältnis L/E, wobei L die Länge, gemessen in die Richtung der Magnetisierung der Magnete (5, 6; 40, 41), bezeichnet, größer als 0,75 ist und vorzugsweise zwischen 0,8 und 0,9 liegt.

11. Einphasiges, elektromagnetisches, rotierendes Betätigungselement nach einem der vorhergehenden Ansprüche, dadurch gekennzeichnet, daß der Querschnitt des Statorverbindungsteils (11), der auf die Feldlinien senkrecht steht, im wesentlichen gleich C x Z ist, wobei:

C den Hub des Rotors (1) bezeichnet, gemessen am durchschnittlichen Durchmesser der Magnete (5, 6; 40, 41), und
Z die Höhe der Magnete (5, 6; 40, 41) bezeichnet, gemessen nach einer auf die Verschiebung und die Richtung der Magnetisierung senkrechten Dimension.

12. Einphasiges, elektromagnetisches, rotierendes Betätigungselement nach einem der Ansprüche 1 bis 6 oder 8 bis 9, dadurch gekennzeichnet, daß die Statorstruktur von zwei parallelen Blechpaketen gebildet wird, wobei diese Pakete senkrecht zusammengebaut sind, wobei das erste dieser Blechpakete, das die Statorpolteile (9, 10) definiert, von Blechen gebildet wird, die senkrecht auf die Rotationsachse (3) angeordnet sind, und wobei das zweite Blechpaket, das den Verbindungsteil (11) in U-Form definiert, von Blechen gebildet wird, die zu einer Symmetrieebene des Stators (2) parallel sind, welche durch die Mitte der Statorpole geht und die Rotationsachse (3) des Rotors (1) enthält und durch die Statorpole (9, 10) geht, wobei die Bleche Ausschnitte für die jeweilige Einfügung und Positionierung dieser Blechpakete aufweisen.

13. Einphasiges, elektromagnetisches, rotierendes Betätigungselement nach Anspruch 12, dadurch gekennzeichnet, daß das erste Blechpaket, das die Polteile (9, 10) definiert, von zwei Reihen von Polblechen (9, 10) gebildet wird, deren Form zu der mittleren Ebene des Betätigungselements symmetrisch ist, und an jedem Ende ein Einzelblech umfaßt, das diesen Polblechen entspricht, die durch 2N sättigbare Isthmen verbunden sind.

**Claims**

1. A monophase electromagnetic rotary actuator with an angular movement between 70/N and 110/N degrees, preferably betwenn 80/N and 110/N degrees, of the type including :

   - a rotor (1) having 2 N magnets (5, 6 ; 40, 41), with N equal to 1 or to 2, and a core (4) made from a high magnetic permeability material,
   - a stator (2) having two polar portions (9, 10) connected by at least a linking portion (11) which carries at least a coil, said polar portions (9, 10) on one hand and said core (4) of stator (2), on the other hand defining therebetween a gap of a constant length E and extending over 2 N arcs $Y_a$

   , characterized in that said magnets (5, 6) are of a type having a linear characteristic curve in the second quadrant of B(H) curve and a close-to-zero reversible permeability and in that the relationship between the magnetized width $Y_a$ as measured on the mean diameter of said magnets (5, 6 ; 40, 41), the angular arc C width covered by rotor (1) onto mean diameter of said magnets (5, 6 ; 40, 41), the width S as measured on mean diameter of said magnets (5, 6 ; 40, 41) between two adjacent statoric poles (9, 10) and constant gap length E is :

   $$Y_a = C + S + 2E'$$

   wherein :
   E' is from E/2 to E,        and in that
   $$\frac{C+2E'}{E} > 6$$
   and in that
   $$\frac{L}{E} > .75, \text{ preferably } .8 < \frac{L}{E} < .9,$$

   with L bening the magnet radial length in order to obtain a high torque / mass ratio and a torque which is substantially independent of the angular position of rotor (1).

2. The monophase electromagnetic rotary actuator of claim 1, characterized in that said 2 N magnets (5, 6) of rotor (1) include radially magnetized magnets (5, 6) having the shape of cylindrical tiles with a peripheral width $Y_a$ as measured onto mean diameter $D_m$ of said magnets (5, 6), said magnets (5, 6) extending on angular sectors from 80/N degrees to 130/N degrees, and in that said statoric portion includes 2 N polar pieces (9, 10) cooperating with said magnet and connected by a U-shaped linking piece (11).

3. The monophase elctromagnetic rotary actuator of claim 1, characterized in that said 2 N magnets (40, 41) of rotor (1) include transversally magnetized magnets (40, 41) having the shape of disc sectors with an aperture angle from 80/N degrees to 130/N degrees, and in that said statoric portion includes 2 N polar pieces (9, 10) cooperating with said magnet and connected by a U-shaped linking piece (11).

4. The monophase electromagnetic rotary actuator of claim 2 or 3, characterized in that the median section plane through said U-shaped linking piece (11) is orthogonal to the rotating axle of rotor (1).

5. The monophase electromagnetic rotary actuator of claim 2 or 3, characterized in that the median section plane through said U-shaped linking piece is parallel to a symmetry plane of said polar pieces (9, 10) and including the rotating axle (3) of rotor (1).

6. The monophase electromagnetic rotary actuator of any preceding claim, characterized in that said statoric portion includes two coils, surrounding each one of said polar pieces (9, 10), with said polar portions (9, 10) being connected by one or two linking pieces.

7. The monophase electromagnetic rotary actuator of any claim 2 - 6, characterized in that said pole portions (9, 10) of stator (2) are connected by two diametrically opposed, linking pieces (11), with each of them carrying an exciting coil.

8. The monophase electromagnetic rotary actuator of any preceding claim, characterized in that width S as measured onto the mean diameter $D_m$

of magnets (5, 6 ; 40, 41) between two consecutive statoric poles (9, 10) is from E/2 to E, with E designating the gap length as measured in the magnetization direction, and in that peripheral width $Y_a$
of said magnets as measured onto the mean diameter $D_m$
of said magnets (5, 6 ; 40, 41) is :

$$Ya = C + 2E' + S \approx C + 3E',$$

and in that both magnets (5, 6 ; 40, 41) extend over arcs markedly lower than 180°/N.

9. The monophase electromagnetic rotary actuator of any claim 1-7, characterized in that width Ys of a statoric pole as measured onto the mean diameter $D_m$

of said magnets (5, 6 ; 40, 41) is egual to

$$Y_s = C + 2E' + T \approx C + 3E'$$

wherein T is the transition region between two adjacent magnets (5, 6 ; 40, 41) of rotor (1), with T being lower than E, extend over arcs markedly lower than 180°/N.

10. The monophase electromagnetic rotary actuator of any preceding claim, characterized in that ratio L/E wherein L designates the length as measured in the magnetization direction of said magnets (5, 6 ; 40, 41) is higher than .75, preferably from .8 to .9.

11. The monophase electromagnetic rotary actuator of any preceding claim, characterized in that the section of said linking statoric piece (11) perpendicular to field lines is substantially equal to C x Z, wherein

- C designates the rotor (1) travel as measured onto the mean diameter of said magnets (5, 6 ; 40, 41),
- Z designates the height of said magnets (5, 6 ; 40, 41) as measured along a dimension perpendicular to displacement and magnetizing direction.

12. The monophase electromagnetic rotary actuator of any claim 1-6, or 8-9, characterized in that said statoric structure includes two parallel metal sheet packs, with said packs being orthogonally assembled, the first one of said metal sheet packs which defines said pole statoric portions (9, 10) being formed of metal sheets arranged perpendicularly to said rotating axle (3), the second one of said metal sheet packs which defines said U-shaped linking piece (11) being formed of metal sheets parallel to a symmetry plane of stator (2) passing through the middle of statoric poles and including the rotating axle (3) of rotor (1) and passing through said statoric poles (9, 10), with said steel sheets showing cut-out portions for comparatively nesting and positionning said steel sheets packs.

13. The monophase electromagnetic rotary actuator of claim 2, characterized in that the first metal sheet pack which definies said polar portions (9, 10) includes two series of polar metal sheets (9, 10) having a symmetric shape in relation to the actuator median plane and comprises at each end a single metal sheet which corresponds to said polar metal sheets linked by two saturable isthmuses.

## FIG. 1

# FIG. 2

## FIG. 3

## Fig. 4

# FIG. 5

Fig. 6

Fig. 7

**Fig. 8**

**Fig. 9**